# EUROPÄISCHE PATENTSCHRIFT

(11) **EP 1 186 866 B1**
(45) Veröffentlichungstag und Bekanntmachung des Hinweises auf die Patenterteilung: **03.01.2007**
(21) Anmeldenummer: 01121525.8
(22) Anmeldetag: 08.09.2001
(51) Int. Cl.: G01C 21/36

(54) **Navigationsvorrichtung**
Navigation device
Dispositif de navigation

(30) Priorität: 12.09.2000 DE 10044935
(43) Veröffentlichungstag der Anmeldung: 13.03.2002
(73) Patentinhaber: ROBERT BOSCH GMBH, 70442 Stuttgart (DE)
(72) Erfinder: Petzold, Bernd, 31234 Edemissen (DE); Draeger, Gerd, 38102 Braunschweig (DE)

(56) Entgegenhaltungen:
- EP-A- 0 645 603
- EP-A- 0 987 665
- WO-A-98/26253
- US-A- 5 537 323
- PATENT ABSTRACTS OF JAPAN vol. 2000, no. 02, 29. Februar 2000 (2000-02-29) & JP 11 325947 A (MATSUSHITA ELECTRIC IND CO LTD), 26. November 1999 (1999-11-26)

## Beschreibung

### Stand der Technik

Die Erfindung geht von einer Navigationsvorrichtung nach der Gattung des Hauptanspruchs aus.

Navigationsvorrichtungen mit einer Berechnungseinheit zur Berechnung einer Route von einem Ausgangspunkt zu einem Zielpunkt und mit einer Wiedergabeeinheit zur Wiedergabe der berechneten Route sind bereits bekannt.

Die EP-A- 0 645 603 offenbart eine Navigationsvorrichtung, welche eine erste Route von einem Ausgangspunkt zu einem Zielpunkt unter Berücksichtigung eines ersten Optimierungskriteriums berechnet und mindestens eine zweite Route vom Ausgangszum Zielpunkt unter Berücksichtigung eines zweiten, abweichenden, Optimierungskriteriums berechnet und welche die mindestens zwei berechneten Routen auf einer Anzeige wiedergibt, so dass der Benutzer eine der berechneten Routen für eine nachfolgende Zielführung auswählen kann.

Die US-A-5 527 323 offenbart ein Navigationssystem mit einer Kartendarstellung, bei der stets ein Kartenausschnitt angezeigt wird, in dem eine aktuelle Fahrzeugposition und deren Umgebung enthalten ist. In diesem Kartenausschnitt wird ein bereits zurückgelegter Abschnitt der Fahrroute, in davon abweichender Darstellung ein noch zu befahrender Abschnitt der Fahrroute und dazu die aktuelle Fahrzeugposition dargestellt. Die vorbestimmte Fahrroute kann neben einer durch das Navigationssystem automatisch berechneten Route, auch durch den Benutzer mittels Eingabemitteln vorgegeben sein.

### Vorteile der Erfindung

Die erfindungsgemäße Navigationsvorrichtung mit den Merkmalen des Hauptanspruchs hat demgegenüber den Vorteil, dass die Berechnungseinheit mindestens eine zweite Route vom Ausgangspunkt zum Zielpunkt berechnet, die von der ersten Route verschieden ist, und dass die Wiedergabeeinheit zusätzlich zur ersten Route die mindestens eine berechnete zweite Route wiedergibt. Auf diese Weise können dem Benutzer der Navigationsvorrichtung mehrere Alternativrouten zur Auswahl angeboten werden, aus denen er eine an seine Bedürfnisse angepasste Route auswählt. Von Vorteil ist dabei, dass Eingabemittel zur Manipulation oder Veränderung mindestens einer der an der Wiedergabeeinheit wiedergegebenen Routen vorgesehen sind und dass eine manipulierte oder veränderte Route zur Zielführung auswählbar ist. Auf diese Weise kann der Benutzer auf der Grundlage der berechneten und wiedergegebenen Routen selbst eine neue Route zusammenstellen, die von den wiedergegebenen Routen verschieden sein kann und den Bedürfnissen des Benutzers am nächsten kommt. Auf diese Weise lässt sich die Navigationsvorrichtung noch mehr an die Bedürfnisse des Benutzers anpassen.

Durch die in den abhängigen Ansprüchen aufgeführten Maßnahmen sind vorteilhafte Weiterbildungen und Verbesserungen der im Hauptanspruch angegebenen Navigationsvorrichtung möglich.

Besonders vorteilhaft ist es, dass eine Auswahleinheit zur Auswahl einer der wiedergegebenen Routen vorgesehen ist und dass eine Zielführungseinheit vorgesehen ist, die Zielführungsinformationen für eine Position zwischen dem Ausgangspunkt und dem Zielpunkt auf der ausgewählten Route erzeugt und zur Wiedergabe an die Wiedergabeeinheit abgibt. Auf diese Weise kann sich der Benutzer auf der nach seinen Bedürfnissen ausgewählten Route vom Ausgangspunkt zum Zielpunkt führen lassen, so dass eine besonders benutzerangepasste Navigationsvorrichtung geschaffen wird.

Besonders vorteilhaft ist es, dass die Wiedergabe der verschiedenen Routen an der Wiedergabeeinheit in Abhängigkeit mindestens eines vorgegebenen Routenkriteriums erfolgt. Auf diese Weise kann sich der Benutzer die verschiedenen Routen nach einem oder mehreren Routenkriterien anzeigen lassen und erhält auf diese Weise eine qualitative Kennzeichnung der wiedergegebenen Routen, die ihn bei der Auswahl einer an seine Bedürfnisse angepassten Route unterstützt.

Ein weiterer Vorteil besteht darin, dass eine Gewichtung des mindestens einen Routenkriteriums an der Eingabeeinheit oder fest vorgebbar ist. Auf diese Weise lässt sich bereits die Wiedergabe der berechneten Routen gemäß der Gewichtung qualitativ klassifizieren, so dass die Entscheidung für eine den Bedürfnissen des Benutzers angepasste Route noch erleichtert wird, da er die Entscheidung nach der angebotenen qualitativen Klassifizierung ohne weiteres Nachdenken und somit besonders schnell vornehmen kann.

Besonders vorteilhaft ist es, dass eine Kommunikationseinheit vorgesehen ist, die Informationen über Verkehrsstörungen, insbesondere über den Verkehrsfluß, auf den berechneten Routen empfängt, und dass die Wiedergabeeinheit diese Informationen wiedergibt. Auf diese Weise wird der Benutzer der Navigationsvorrichtung auch über die aktuelle Verkehrslage auf den berechneten und wiedergegebenen Routen informiert, so dass er die aktuelle Verkehrslage bei der Auswahl einer an seine Bedürfnisse angepassten Route berücksichtigen kann. Somit kann der Benutzer der Navigationsvorrichtung den wiedergegebenen Informationen ebenfalls eine qualitative Klassifizierung der berechneten Routen entnehmen und so übersichtlicher und schneller zur Auswahl einer an seine Bedürfnisse angepassten Route gelangen.

Ein weiterer Vorteil besteht darin, dass die Wiedergabeeinheit die Informationen über Verkehrsstörungen zusammen mit den berechneten Routen wiedergibt. Auf diese Weise wird die Übersichtlichkeit der Wiedergabe erhöht und der Benutzer kann schneller eine an seine Bedürfnisse angepasste Route auswählen, da er alle relevanten Informationen gleichzeitig wahrnimmt. Eine besonders übersichtliche Wiedergabe von Verkehrsstörungen kann in Form von Isolinien oder in Form eines isografischen Diagramms erfolgen.

Besonders vorteilhaft ist es, dass bei Empfang von Informationen über eine Verkehrsstörung auf der ausgewählten Route die Berechnungseinheit mindestens eine weitere von der ausgewählten Route verschiedene Route ausgehend von der aktuellen Position als neuem Ausgangspunkt zum vorgegebenen Zielpunkt berechnet, und dass die Wiedergabeeinheit zusätzlich zur ausgewählten Route die mindestens eine berechnete weitere Route zur Auswahl wiedergibt. Auf diese Weise kann der Benutzer frühzeitig auf Verkehrsstörungen reagieren, die auf der von ihm ausgewählten Route während seiner Bewegung vom ursprünglichen Ausgangspunkt zum vorgegebenen Zielpunkt auftreten und auf eine auf die detektierte Verkehrsstörung hin berechnete neue Alternativroute ausweichen, um diese Verkehrsstörung zu umgehen. Somit wird eine Aktualisierung der ausgewählten Route ermöglicht, die auch eine aktuelle Anpassung der ausgewählten Route an die Bedürfnisse des Benutzers ermöglicht.

Ein weiterer Vorteil besteht darin, dass die empfangenen Informationen auch die Art der Verkehrsstörung umfassen und dass die Wiedergabeeinheit die Art der Verkehrsstörung wiedergibt. Auf diese Weise erhält der Benutzer der Navigationsvorrichtung eine zusätzliche Entscheidungshilfe über die Qualität der Verkehrsstörung, die ihm eine noch bessere Beurteilung der vorgeschlagenen Alternativrouten ermöglicht.

### Zeichnung

Ausführungsbeispiele der Erfindung sind in der Zeichnung dargestellt und in der nachfolgenden Beschreibung näher erläutert. Es zeigen Figur 1 ein Blockschaltbild einer erfindungsgemäßen Navigationsvorrichtung, Figur 2 eine Darstellung von Verkehrsstörungen auf einer Straßenkarte in Form von Isolinien, Figur 3 eine Darstellung von Verkehrsstörungen auf einer Straßenkarte in Form eines isografischen Diagramms, Figur 4 eine Darstellung einer Straßenkarte mit einer ausgewählten Route und Alternativrouten bei Auftreten einer Verkehrsstörung auf der ausgewählten Route, Figur 5 die Darstellung einer ausgewählten berechneten Route von einem Ausgangspunkt zu einem Zielpunkt, Figur 6 eine Darstellung für Alternativrouten auf einer Straßenkarte, Figur 7 die Darstellung einer ausgewählten Route von einem Ausgangspunkt zu einem Zielpunkt auf einer Straßenkarte für eine aktuelle Position der Navigationsvorrichtung zwischen dem Ausgangspunkt und dem Zielpunkt, Figur 8 eine Darstellung von Alternativrouten von einer solchen aktuellen Position der Navigationsvorrichtung zwischen dem ursprünglichen Ausgangspunkt und dem Zielpunkt ausgehend, Figur 9 eine Überlagerungsdarstellung einer ausgewählten Route mit Informationen über Verkehrsstörungen und Figur 10 eine Überlagerung der ausgewählten Route mit Informationen über Verkehrsstörungen und einer zusätzlichen Darstellung von Alternativrouten.

### Beschreibung der Ausführungsbeispiele

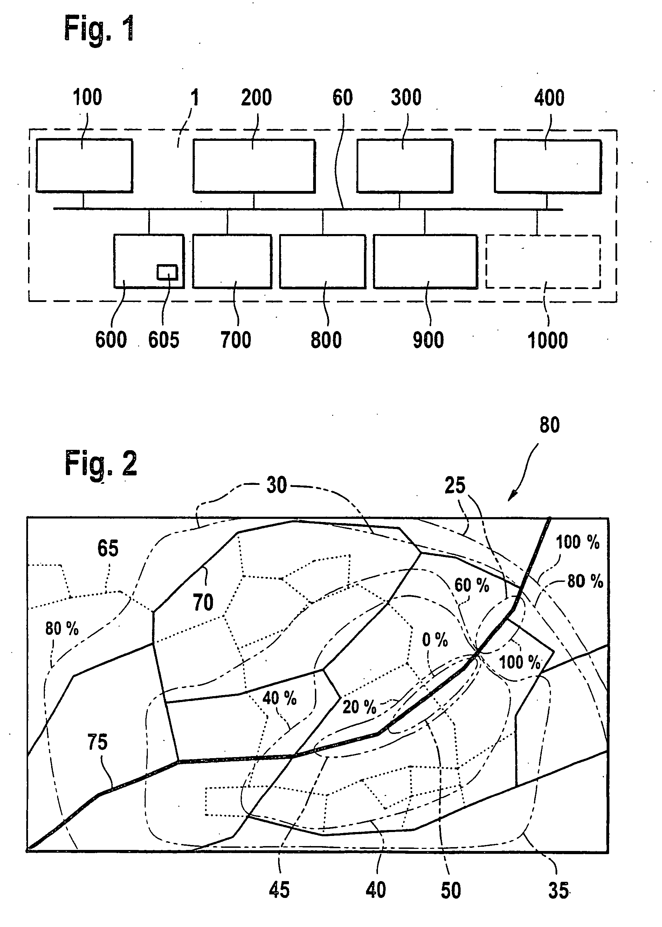

In Figur 1 kennzeichnet 1 eine Navigationsvorrichtung. Die Navigationsvorrichtung 1 soll im Folgenden beispielhaft in einem Kraftfahrzeug angeordnet sein. Sie umfasst einen Speicher 100, in dem eine digitale Straßenkarte abgespeichert ist. Die Navigationsvorrichtung 1 umfasst weiterhin eine Positionsbestimmungseinheit 300 zur Bestimmung einer aktuellen Position der Navigationsvorrichtung 1 bzw. des Kraftfahrzeugs. Dies kann mit Hilfe eines GPS-Empfängers (Global Positioning System) erfolgen. Die Navigationsvorrichtung 1 umfasst weiterhin eine Berechnungseinheit 400 zur Berechnung von Fahrtrouten von einem vorgegebenen Ausgangspunkt S zu einem vorgegebenen Zielpunkt Z. Die Navigationsvorrichtung 1 umfasst weiterhin eine Eingabeeinheit 600, die wiederum Eingabemittel 605 umfasst. Die Navigationsvorrichtung 1 umfasst weiterhin eine Wiedergabeeinheit 700, die eine optische Anzeigevorrichtung und/oder eine akustische Wiedergabevorrichtung umfassen kann. Die Navigationsvorrichtung 1 umfasst weiterhin eine Zielführungseinheit 800, die Zielführungsinformationen für eine aktuelle Position der Navigationsvorrichtung 1 bzw. des Fahrzeugs zwischen dem Ausgangspunkt S und dem Zielpunkt Z auf einer ausgewählten Route erzeugt und zur Wiedergabe an die Wiedergabeeinheit 700 abgibt. Die Navigationsvorrichtung 1 umfasst weiterhin eine Auswahleinheit 900 zur Auswahl einer der an der Wiedergabeeinheit 700 wiedergegebenen Routen, so dass für Positionen auf einer solchermaßen ausgewählten Route zwischen dem Ausgangspunkt S und dem Zielpunkt Z Zielführungsinformationen von der Zielführungseinheit 800 erzeugt werden können. Die Navigationsvorrichtung 1 kann optional auch eine Kommunikationseinheit 1000 umfassen, die Informationen über Verkehrsstörungen auf den durch die Berechnungseinheit 400 berechneten Routen empfängt und zur Wiedergabe an die Wiedergabeeinheit 700 abgibt. Die genannten Komponenten der Navigationsvorrichtung 1 sind mittels eines Datenbusses 60 miteinander verbunden und können auf diese Weise Daten untereinander austauschen. Der Datenaustausch auf dem Datenbus 60 wird dabei durch eine Verwaltungseinheit 200 verwaltet, die ebenfalls an den Datenbus 60 angeschlossen ist.

Die Funktionsweise der Navigationsvorrichtung 1 wird nun im Folgenden näher beschrieben.

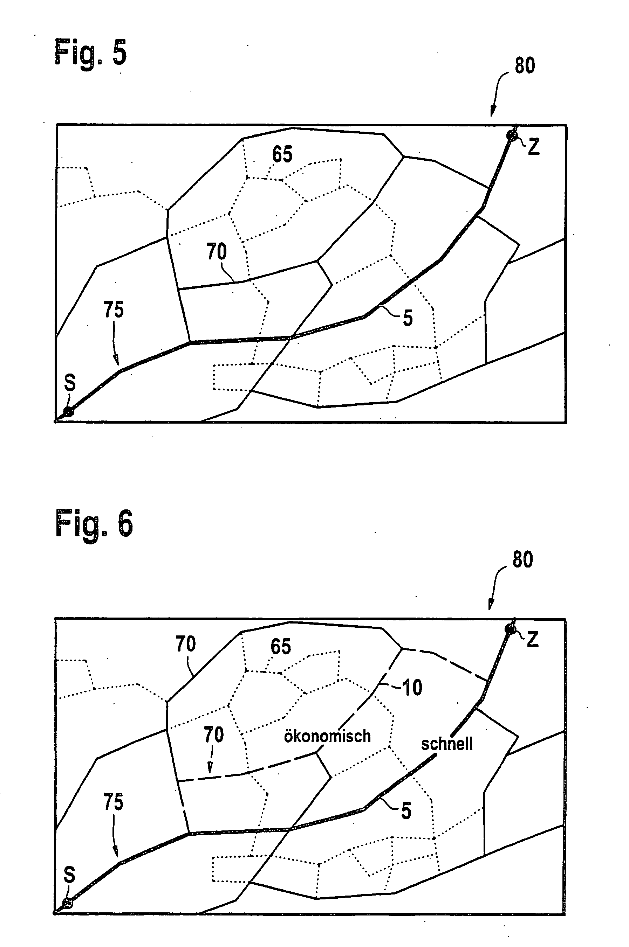

Gemäß Figur 5 befindet sich das Fahrzeug mit der Navigationsvorrichtung 1 am Ausgangspunkt S, wie er in einer Straßenkarte 80 dargestellt ist. Im Folgenden soll beispielhaft angenommen werden, dass die Wiedergabeeinheit 700 eine optische Anzeigevorrichtung, beispielsweise ein Display, umfasst, das die Straßenkarte 80 in digitalisierter Form anzeigt. Auf dieser Straßenkarte 80 sind Nebenstraßen durch das Bezugszeichen 65, Hauptstraßen durch das Bezugszeichen 70 und eine Autobahn durch das Bezugszeichen 75 gekennzeichnet. Der Ausgangspunkt S wird dabei durch die Positionsbestimmungseinheit 300 ermittelt. Der Benutzer der Navigationsvorrichtung 1 bzw. der Fahrer des Kraftfahrzeugs gibt nun an der Eingabeeinheit 600 den gewünschten Zielpunkt Z ein, der ebenfalls in der Straßenkarte 80 gemäß Figur 5 dargestellt wird. Durch eine weitere Eingabe an der Eingabeeinheit 600 oder automatisch nach Eingabe des Zielpunktes Z berechnet die Berechnungseinheit 400 eine erste Route 5 vom Ausgangspunkt S zum Zielpunkt Z, die in der Straßenkarte 80 gemäß Figur 5 vollständig auf der Autobahn 75 verläuft. Diese erste Route 5 wird an der optischen Anzeigevorrichtung deutlich hervorgehoben, beispielsweise durch Einfärben der ersten Route 5 auf der Straßenkarte 80, durch Hervorheben der ersten Route 5 durch Umrahmen der zugehörigen Straßen- bzw. Autobahnabschnitte, durch Kennzeichnen der ersten Route 5 mittels Pfeilen, die vom Ausgangspunkt S zum Zielpunkt Z weisen oder durch Textdarstellung der verwendeten Straßen für die erste Route 5 in Form einer Liste.

Erfindungsgemäß ist nun vorgesehen, dass die Berechnungseinheit mindestens eine zweite Route 10 vom Ausgangspunkt S zum Zielpunkt Z berechnet, die von der ersten Route 5 verschieden ist und an der optischen Anzeigevorrichtung zusätzlich zur ersten Route 5 dargestellt wird. Dies ist in Figur 6 dargestellt, bei der gleiche Bezugszeichen gleiche Teile kennzeichnen wie in Figur 5. Ausgehend von der ersten Route 5 gemäß Figur 5 zeigt die Straßenkarte 80 gemäß Figur 6 zusätzlich die zweite Route 10, die im Bereich des Ausgangspunktes S und des Zielpunktes Z ebenfalls auf der Autobahn 75 verläuft, dazwischen jedoch eine Verbindung über Hauptstraßen 70 vorschlägt. Die Wiedergabe der verschiedenen Routen 5, 10 an der optischen Anzeigevorrichtung kann dabei in Abhängigkeit mindestens eines vorgegebenen Routenkriteriums erfolgen. Die Vorgabe mindestens eines Routenkriteriums kann dabei vom Benutzer an der Eingabeeinheit 600 vorgenommen werden oder auch fest vorgegeben und in der Verwaltungseinheit 200 gespeichert sein. Im vorliegenden Beispiel gemäß Figur 6 wurden die Routenkriterien Kraftstoffverbrauch und Fahrzeit vorgegeben, wobei bei der Anzeige an der optischen Anzeigevorrichtung die erste Route 5 von der Berechnungseinheit 400 als schnell und die zweite Route 10 von der Berechnungseinheit 400 als ökonomisch gekennzeichnet wird. Der Benutzer kann sich nun entscheiden, ob er die erste Route 5 oder die zweite Route 10 an der Auswahleinheit 900 auswählen will, wobei nach der Auswahl die Zielführungseinheit 800 Zielführungsinformationen für Positionen der Navigationsvorrichtung 1 bzw. des Kraftfahrzeugs zwischen dem Ausgangspunkt S und dem Zielpunkt Z auf der ausgewählten Route 5 erzeugt und zur Darstellung an der optischen Anzeigevorrichtung abgibt. Als Routenkriterien können auch das Staurisiko, die maximal oder im Mittel erzielbare Geschwindigkeit, die Länge der Fahrstrecke und/oder dergleichen an der Eingabeeinheit 600 oder fest vorgegeben werden. Ferner kann es vorgesehen sein, als Routenkriterium ein oder mehrere sogenannte Meidegebiete vorzugeben, durch die die von der Berechnungseinheit 400 berechneten Routen nicht führen sollen. Auch ist es möglich, an der Eingabeeinheit 600 eine Gewichtung des mindestens einen Routenkriteriums vorzugeben, wobei eine solche Gewichtung auch fest vorgegeben und in der Verwaltungseinheit 200 gespeichert sein kann. Eine solche Gewichtung kann beispielsweise derart vorgenommen werden, dass die von der Berechnungseinheit 400 berechneten Routen nach Fahrtzeit als Routenkriterium und nach Staurisiko als Gewichtung bewertet werden und entsprechend gekennzeichnet an der optischen Anzeigevorrichtung dargestellt werden. Auf diese Weise lassen sich gemischte Routenkriterien erzeugen. So kann es beispielsweise vorgesehen sein, in der Straßenkarte 80 die von der Berechnungseinheit 400 berechneten Routen in die schnellste Route mit 10% Staurisiko, die schnellste Route mit 20% Staurisiko, die schnellste Route mit 30% Staurisiko usw. grafisch zur Auswahl zu präsentieren. Das Routenkriterium der Fahrtzeit wird somit wie beschrieben durch das Routenkriterium des Staurisikos gewichtet.

Es kann nun weiterhin vorgesehen sein, dass der Benutzer der Navigationsvorrichtung 1 nicht auf die an der optischen Anzeigevorrichtung angebotenen Routen zur Auswahl an der Auswahleinheit 900 festgelegt ist, sondern ausgehend von den durch die Berechnungseinheit 400 berechneten Routen eine neue Route zusammenstellen kann. Dies kann beispielsweise dadurch bewirkt werden, dass an der Eingabeeinheit 600 Eingabemittel 605 beispielsweise in Form eines Mauszeigers oder von Cursortasten vorgesehen sind, mittels denen einzelne Straßenabschnitte in der Straßenkarte 80 markiert werden können. Durch Betätigung einer Bestätigungstaste an der Eingabeeinheit 600 können die markierten Straßenabschnitte dann zu einer neuen Route hinzugenommen werden, so dass eine vom Benutzer der Navigationsvorrichtung 1 selbst zusammengestellte Route entsteht. Auf diese Weise kann der Benutzer der Navigationsvorrichtung 1 also selbst eine neue Route kreieren, die dann an der optischen Anzeigevorrichtung zur Auswahl durch die Auswahleinheit 900 wiedergegeben wird. Wird sie vom Benutzer ausgewählt, so leitet die Zielführungseinheit 800 den Benutzer mittels entsprechender Zielführungsinformationen auf dieser vom Benutzer selbst erstellten neuen Route vom Ausgangspunkt S zum Zielpunkt Z.

In Figur 2 ist die Straßenkarte 80 ohne Kennzeichnung des Ausgangspunktes S und des Zielpunktes Z und auch ohne Kennzeichnung einer von der Berechnungseinheit 400 berechneten Route dargestellt. Mittels der optional vorhandenen Kommunikationseinheit 1000, die über eine Luftschnittstelle mit einem Mobilfunknetz in Verbindung stehen kann oder zum Empfang von Rundfunksignalen ausgelegt sein kann, werden Informationen über Verkehrsstörungen auf den von der Berechnungseinheit 400 berechneten Routen 5, 10 empfangen und von der Wiedergabeeinheit 700 bzw. der optischen Anzeigevorrichtung dargestellt. Die Darstellung kann dabei getrennt von den berechneten Routen 5, 10 erfolgen, wie dies in Figur 2 ersichtlich ist. Dabei werden die Verkehrsstörungen von der optischen Anzeigevorrichtung in Form von Isolinien 25, 30, 35, 40, 45, 50 wiedergegeben, wobei die Isolinien Grenzlinien von Verkehrsstörungen konstanter Größe darstellen. Die Verkehrsstörungen können dabei beispielsweise durch Angabe des Verkehrsflusses wiedergegeben werden. Sie können aber auch durch die erreichbare mittlere Höchstgeschwindigkeit, das Staurisiko, die in Kauf zu nehmende mittlere Zeitverzögerung usw. zum Ausdruck kommen. Gemäß Figur 2 sind die Verkehrsstörungen in Form des Verkehrsflusses in Prozent angegeben. Je geringer der Prozentsatz, desto geringer der Verkehrsfluß. Der Verkehrsfluß kann sich dabei zwischen 0%, d.h. Verkehsstillstand und 100%, d.h. keine Verkehsbehinderung bewegen. In der Straßenkarte 80 nach Figur 2 sind solche Isolinien für den Verkehrsfluß eingezeichnet, wobei eine erste Isolinie 25 den Verkehrsfluß 100% gekennzeichnet, eine zweite Isolinie 30 den Verkehrsfluß 80%, eine dritte Isolinie 35 den Verkehrsfluß 60%, eine vierte Isolinie 40 den Verkehrsfluß 40%, eine fünfte Isolinie 45 den Verkehrsfluß 20% und eine sechste Isolinie 50 den Verkehrsfluß 0% kennzeichnet. Dabei ist gemäß Figur 2 im Bereich der Autobahn 75 durch die sechste Isolinie 50 ein Streckenabschnitt mit 0% Verkehrsfluß erkennbar, dem eng benachbart durch die erste Isolinie 25 ein Streckenabschnitt mit einem 100%-igen Verkehrsfluß gegenübersteht.

Auch in Figur 2 kennzeichnen wieder gleiche Bezugszeichen gleiche Elemente wie in den vorangegangenen beschriebenen Figuren.

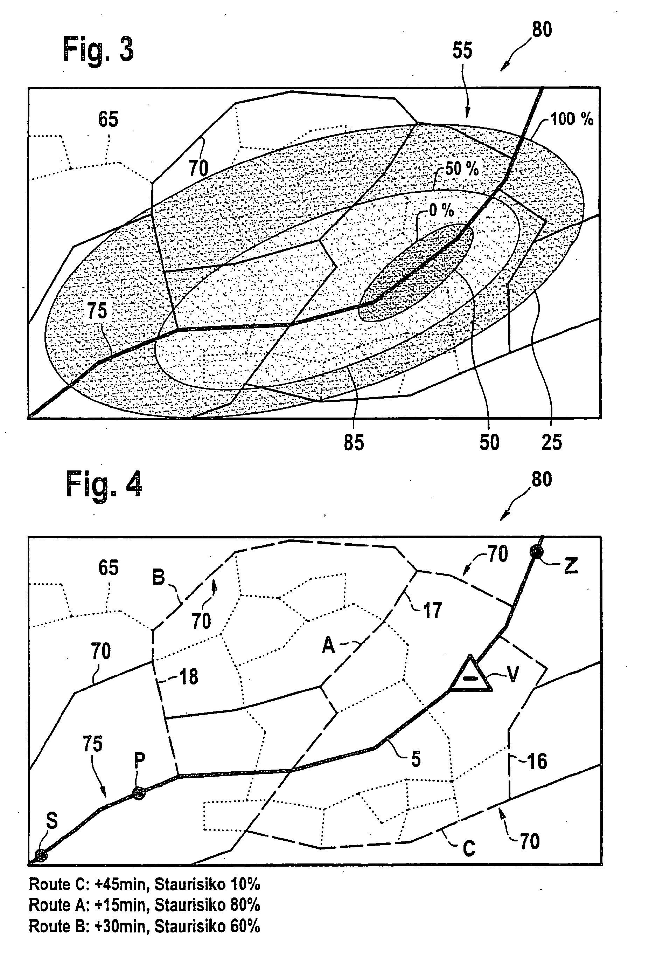

Eine Wiedergabe der Verkehrsstörungen an der optischen Anzeigevorrichtung kann auch in Form eines isografischen Diagramms 55 gemäß Figur 3 erfolgen, bei dem die verschiedenen Bereiche zwischen den Isolinien in unterschiedlicher Farbe oder Helligkeit dargestellt werden. Dabei ist ausgehend von der bereits in Figur 2 dargestellten Straßenkarte 80 wieder die erste Isolinie 25, die sechste Isolinie 50 und eine siebte Isolinie 85 mit 50% Verkehrsfluß dargestellt, wobei die Isolinien anders liegen als im Beispiel nach Figur 2, jedoch wieder ein Streckenabschnitt der Autobahn 75 in einem Bereich von 0% Verkehrsfluß liegt, da er wie auch in Figur 2 von der sechsten Isolinie 50 umschlossen wird. Die von einer Isolinie umschlossenen Bereiche werden auch als Isofläche bezeichnet. Diese sind in Figur 3 jeweils durch unterschiedliche Grauwerte gekennzeichnet. Ihr Verkehrsfluß entspricht mindestens dem der sie umgebenden Isolinie. Auch in Figur 3 kennzeichnen gleiche Bezugszeichen gleiche Elemente wie in den vorangegangenen Figuren.

In den Figuren 2 und 3 sind nur die Informationen über die Verkehrsstörungen in der entsprechenden Straßenkarte 80 eingetragen, nicht jedoch die von der Berechnungseinheit 400 berechneten Routen. Dies ermöglicht eine getrennte Darstellung der Verkehrsstörungen und der von der Berechnungseinheit 400 berechneten Routen 5, 10 an der optischen Anzeigevorrichtung, die beispielsweise in zwei einander benachbarten Displays oder sequentiell auf ein und demselben Display erfolgen kann.

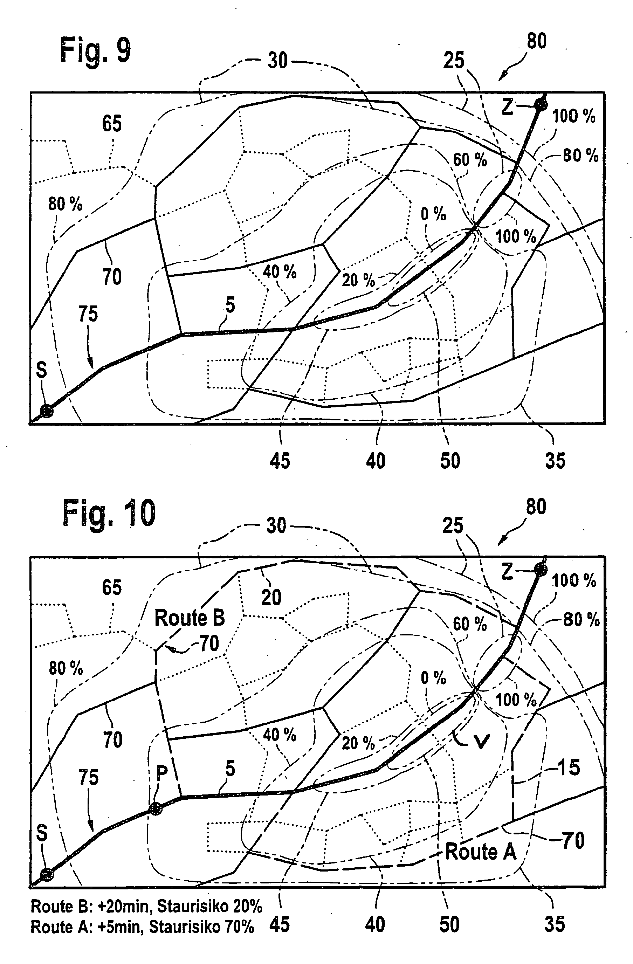

Es ist jedoch auch möglich, die Verkehrsstörungen und die von der Berechnungseinheit 400 berechneten Routen einander überlagert darzustellen, wie dies in Figur 9 dargestellt ist. Dort ist ausgehend von der Straßenkarte 80 gemäß den Figuren 2, 3, 5, 6 die erste Route 5 dargestellt und ihr überlagert die Verkehrsstörungen gemäß Figur 2 in Form der Isolinien 25, 30, 35, 40, 45, 50. Auch in Figur 9 kennzeichnen gleiche Bezugszeichen gleiche Elemente wie in den vorherigen Figuren.

Gemäß Figur 9 lässt sich also eine Darstellung der Verkehrsstörungen zusammen mit zumindest der ersten Route 5 auf der Straßenkarte 80 entnehmen.

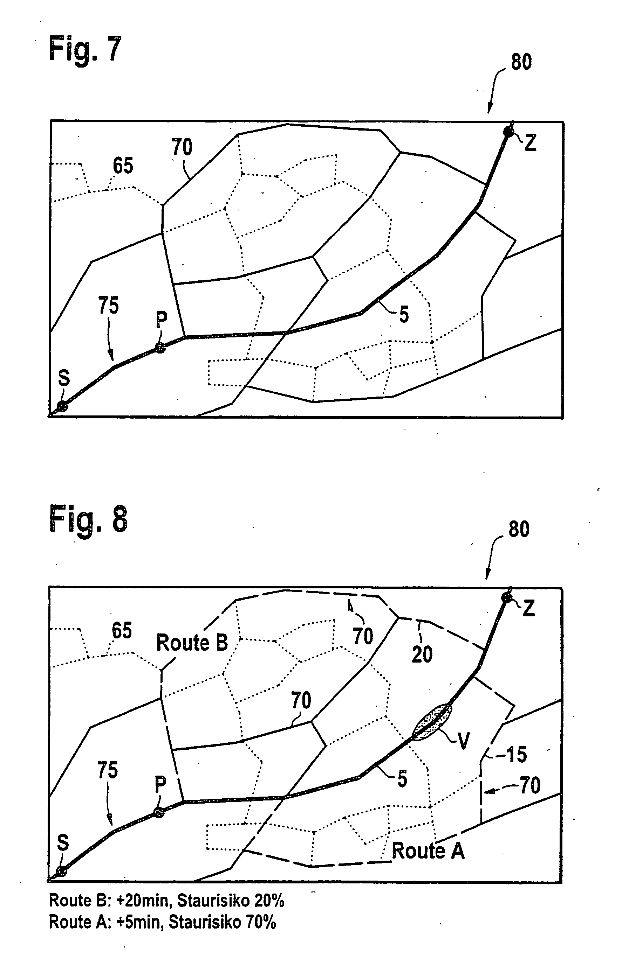

Ausgehend von den dem Benutzer gemäß Figur 6 angebotenen zwei alternativen Routen 5, 10 soll im Folgenden beispielhaft davon ausgegangen werden, dass sich der Benutzer für die schnellere der beiden Routen, d.h. für die erste Route 5 auf der Autobahn 75 entschieden und diese an der Auswahleinheit 900 für die Zielführung ausgewählt hat. Die Zielführungseinheit 800 erzeugt somit für Positionen zwischen dem Ausgangspunkt S und dem Zielpunkt Z auf der ausgewählten ersten Route 5 Zielführungsinformationen, die sie zur Wiedergabe an die optische Anzeigevorrichtung abgibt und den Benutzer der Navigationsvorrichtung 1 bzw. den Fahrer des Kraftfahrzeugs auf diese Weise vom Ausgangspunkt S zum Zielpunkt Z hin auf der ersten Route 5 leitet. Es soll nun gemäß Figur 7 angenommen werden, dass sich der Benutzer der Navigationsvorrichtung 1 an einer aktuellen Position P zwischen dem Ausgangspunkt S und dem Zielpunkt Z auf der ersten Route 5, also der Autobahn 75 befindet. In Figur 7 kennzeichnen gleiche Bezugszeichen gleiche Elemente wie in den vorangegangenen Figuren. Wenn die Navigationsvorrichtung 1 gemäß Figur 7 auf der Straßenkarte 80 die aktuelle Position P erreicht, empfängt die Kommunikationseinheit 1000 in diesem Beispiel Informationen über eine Verkehrsstörung auf der ausgewählten ersten Route 5. Daraufhin veranlasst die Verwaltungseinheit 200 die Berechnungseinheit 400 zur Berechnung mindestens einer weiteren, von der ausgewählten ersten Route 5 verschiedenen Route 15, 20 ausgehend von der aktuellen Position P als neuem Ausgangspunkt zum vorgegebenen Zielpunkt Z, wobei die Wiedergabeeinheit bzw. die optische Anzeigevorrichtung zusätzlich zur ausgewählten ersten Route 5 die mindestens eine an der Berechnungseinheit 400 berechnete weitere Route 15, 20 zur Auswahl wiedergibt, wie in Figur 8 dargestellt ist, in der ebenfalls gleiche Bezugszeichen gleiche Elemente kennzeichnen wie in den vorherigen Figuren.

Gemäß Figur 8 zeigt die optische Anzeigevorrichtung auf der ersten Route 5 zwischen der aktuellen Position P und dem Zielpunkt Z eine Verkehrsstörung V und gibt Vorschläge an, wie diese Verkehrsstörung V durch zwei Alternativrouten 15, 20 von der aktuellen Position P aus umfahren werden kann. Diese beiden Routen 15, 20 wurden von der Berechnungseinheit 400 berechnet und nach den bereits genannten und in diesem Beispiel voreingestellten Routenkriterien Fahrtzeit gewichtet mit Staurisiko gekennzeichnet. Dabei stellt die dritte Route 15 eine Südumfahrung der Verkehrsstörung V dar, die ausschließlich Hauptstraßen 70 nutzt und eine Verzögerung von 5 Minuten gegenüber der ersten Route 5 bei einem Staurisiko von 70% darstellt. Eine vierte Route 20 stellt eine Nordumfahrung der Verkehrsstörung V dar, die ebenfalls ausschließlich Hauptstraßen 70 nutzt und gegenüber der ersten Route 5 eine Verzögerung von 20 Minuten bei einem Staurisiko von 20% beinhaltet. Die Wiedergabe dieser Informationen über Verzögerung und Staurisiko für die einzelnen an der optischen Anzeigevorrichtung dargestellten Routen 15, 20 erfolgt ebenfalls an der optischen Anzeigevorrichtung unterhalb der Straßenkarte 80 wie in Figur 8 dargestellt ist. Dabei ist die dritte Route 15 als Route A bezeichnet und die vierte Route 20 als Route B. Die Werte für die Routenparameter Fahrzeit und Staurisiko werden dabei von der Berechnungseinheit 400 berechnet, wobei die Fahrtzeit sich aus der auf den Alternativrouten 15, 20 jeweils ergebenden zulässigen Höchstgeschwindigkeit und das jeweilige Staurisiko aus aktuellen Verkehrsinformationen sowie Erfahrungswerten aus der Vergangenheit, die im Speicher der Verwaltungseinheit 200 gespeichert sind, ergeben. Dabei kann eine gewichtete Addition der Erfahrungswerte für das Staurisiko mit den aktuellen Verkehrsinformationen für die jeweilige Alternativroute 15, 20 durchgeführt werden, die zu dem an der optischen Anzeigevorrichtung dargestellten jeweiligen Wert für das Staurisiko führt. Die Speicherung der Erfahrungswerte für das Staurisiko für die einzelnen Routen bzw. Streckenabschnitte werden in der Verwaltungseinheit 200 in Zuordnung zu diesen Streckenabschnitten gespeichert, wobei diese Streckenabschnitte selbst im Speicher 100 für die digitalen Kartendaten der Straßenkarte 80 abgelegt sind.

Wenn die von der Kommunikationseinheit 1000 empfangenen Informationen auch die Art der Verkehrsstörung umfassen, so kann diese an der Wiedergabeeinheit 700 bzw. deren optischer Anzeigevorrichtung ebenfalls wiedergegeben bzw. dargestellt werden und zwar beispielsweise in Zuordnung zu einer grafischen Markierung der ersten Route 5 an der Stelle der Verkehrsstörung V, wie in Figur 8 durch eine Verdickung der ersten Route 5 dargestellt.

Ein zu Figur 8 alternatives Ausführungsbeispiel zeigt Figur 4, bei dem ausgehend von der gleichen Ausgangssituation wie in Figur 8 die Berechnungseinheit 400 drei Alternativrouten 16, 17, 18 berechnet und zur Wiedergabe an der Wiedergabevorrichtung 700 bzw. deren optischer Anzeigevorrichtung abgegeben hat. Eine fünfte Route 16 stellt wiederum eine nur Hauptstraßen 70 nutzende Südumfahrung der Verkehrsstörung V dar, die einen zusätzlichen Zeitbedarf von 45 Minuten gegenüber der ersten Route 5 bei geringstem Staurisiko von 10% darstellt. Eine sechste Route 17 stellt eine erste Nordumfahrung der Verkehrsstörung V dar, die ebenfalls nur Hauptstraßen 70 nutzt und einen zusätzlichen Zeitbedarf von 15 Minuten gegenüber der ersten Route 5 bei höchstem Staurisiko von 80% darstellt. Eine siebte Route 18 stellt eine zweite Nordumfahrung der Verkehrsstörung V dar, die einen zusätzlichen Zeitbedarf von 30 Minuten bei einem zwischen den beiden genannten Staurisiken liegenden mittleren Staurisiko von 60% darstellt. Auch beim Ausführungsbeispiel nach Figur 4 können die Eigenschaften der drei Alternativrouten 16, 17, 18 zur ersten Routen 5 benachbart zur Straßenkarte 80 an der optischen Anzeigevorrichtung dargestellt sein, um dem Benutzer die Auswahl einer der Alternativrouten zur Umgehung der Verkehrsstörung V zu erleichtern. Dabei ist gemäß Figur 4 die fünfte Route 16 als Route C, die sechste Route 17 als Route A und die siebte Route 18 als Route B ausgewiesen. Das Staurisiko auf der fünften Route 16 soll dabei wie beschrieben beispielhaft 10% betragen, auf der sechsten Route 17 beispielhaft 80% und auf der siebten Route 18 beispielhaft 60%.

Figur 10 zeigt nun eine Überlagerung der Routendarstellung gemäß Figur 8 und der Darstellung der Informationen über den Verkehrsfluß anhand von Isolinien gemäß Figur 9. Dabei kennzeichnen wieder gleiche Bezugszeichen gleiche Elemente wie in den vorherigen Figuren. Die Überlagerung der Informationen über den Verkehrsfluß zusammen mit der Darstellung der Alternativrouten 15, 20 erhöht für den Benutzer der Navigationsvorrichtung 1 die Übersichtlichtkeit und erleichtert und beschleunigt somit seine Entscheidung für eine der beiden Alternativrouten 15, 20 zur Umfahrung der auch in Figur 10 mit V gekennzeichneten Verkehrsstörung auf der ersten Route 5, die in der durch die Isolinie 0% umschlossenen Isofläche liegt, so dass dort offensichtlich der Verkehrsfluß ins Stocken geraten ist.

Der an der aktuellen Position P befindliche Benutzer der Navigationsvorrichtung 1 wählt nun eine der Alternativrouten 15, 20 gemäß den Ausführungsbeispielen nach Figur 8 und Figur 10 zur Umfahrung der Verkehrrstörung V bzw. eine der Alternativrouten 16, 17, 18 zur Umfahrung der Verkehrsstörung V gemäß Figur 4 an der Auswahleinheit 900 aus und wird von der Zielführungseinheit 800 auf der ausgewählten Route von der aktuellen Position P zum Zielpunkt Z in Umfahrung der Verkehrsstörung V geführt. Selbstverständlich kann der Benutzer natürlich auch nach wie vor die erste Route 5 auswählen, wenn er die Verkehrsstörung V nicht umfahren will.

Auch zur Umfahrung der Verkehrsstörung V kann der Benutzer in der bereits beschriebenen Weise seine eigene Alternativroute zusammenstellen und auswählen, um auf ihr mittels der Zielführungseinheit 800 zum Zielpunkt Z geführt zu werden. Die beschriebene Ausführungsform über die Darstellung von Informationen über Verkehrsstörungen ist nur möglich, wenn die Kommunikationseinheit 1000 in der Navigationsvorrichtung 1 oder zugeordnet zu dieser vorhanden ist. Ansonsten können die Alternativrouten nur unabhängig von Informationen über solche Verkehrsstörungen berechnet werden. Ohne die Kommunikationseinheit 1000 findet auch kein Aktualisieren der Alternativrouten gemäß den Beispielen nach Figur 4, Figur 8 und Figur 10 statt.

Die von einer Isolinie umschlossene Isofläche gibt in den zuvor beschriebenen Ausführungsbeispielen den jeweiligen Mindestverkehrsfluß in dem durch die Isofläche abgedeckten geografischen Bereich an.

Meidegebiete können entweder vom Benutzer an der Eingabeeinheit 600 oder fest in der Verwaltungseinheit 200 in direkter Zuordnung zu den im Speicher 100 gespeicherten Straßenabschnitten der Karte 80 vorgegeben sein. Dabei besteht in beiden Fällen eine Möglichkeit zum Sperren bestimmter Straßen oder Straßenabschnitte wie beispielsweise Autobahnkreuze in der Kartenansicht der Straßenkarte 80 an der optischen Anzeigevorrichtung. Solche gesperrten Straßen oder Straßenabschnitte werden dann nicht bei der Bestimmung von alternativen Routen berücksichtigt. Wenn die Eingabe von Meidegebieten durch den Benutzer an der Eingabeeinheit 600 möglich sein soll, so können bestimmte Gebiete durch Plazieren eines Flächenobjektes in der Kartenansicht der Straßenkarte 80 an der optischen Anzeigevorrichtung beispielsweise durch Cursorsteuerung realisiert werden. Das Modifizieren einer oder mehrerer an der optischen Anzeigevorrichtung dargestellten Alternativrouten kann auch durch grafisches bzw. cursorgesteuertes Versetzen von vorgeschlagenen Straßenabschnitten in der Straßenkarte 80 erfolgen, z.B. in der Art, dass vorgeschlagene Straßenabschnitte auf nicht vorgeschlagene Straßenabschnitte verschoben und somit die vorgeschlagene Alternativroute verändert wird. Die vorgeschlagenen Alternativrouten können auch dadurch modifiziert werden, dass in der beschriebenen Weise grafisch Flächenobjekte in der Straßenkarte hinzugefügt werden, die Meidegebiete kennzeichnen. Das grafische Versetzen von Straßenabschnitten oder Meidegebieten kann wie beschrieben durch Cursorsteuerung mittels eines Mauszeigers oder von Coursortasten erfolgen.

Die alternativen Routen können in der Straßenkarte 80 in unterschiedlicher Weise dargestellt werden, damit sie vom Benutzer unterschieden werden können, beispielsweise mit unterschiedlicher Farbe oder unterschiedlicher Farbabstufung.

Für den Fall, dass auch qualitative Verkehrsstörungen in der Straßenkarte 80 angegeben werden sollen bzw. können, sofern die Kommunikationseinheit 1000 vorgesehen ist, so kann dies beispielsweise dadurch geschehen, dass die Verkehrsstörung V näher gekennzeichnet wird, beispielsweise als Stau wegen eines Unfalls mit einer Länge von 10 km.

Die Darstellung von Verkehrsstörungen in Form von Isolinien ist nicht auf die Darstellung des Verkehrsflusses beschränkt, sondern kann auch für die Darstellung der erzielbaren Höchstgeschwindigkeit, des Staurisikos, der in Kauf zu nehmenden Zeitverzögerung oder dergleichen verwendet werden. In jedem Fall erhält der Benutzer der Navigationsvorrichtung 1 bzw. der Fahrer des Kraftfahrzeugs durch die Darstellung der Verkehrsstörungen in Form von Isolinien eine sehr anschauliche Information über Intensität und Ausdehnung einer Verkehrsstörung. Entsprechendes gilt für die Darstellung der Verkehrsstörungen in Form eines isografischen Diagramms, wobei die Abstufungen der Bereiche konstanten Mindestverkehrsflusses, konstanter mindestens erreichbarer Höchstgeschwindigkeit, konstanten mindesten Staurisikos, konstanter mindester Zeitverzögerung usw. durch unterschiedliche Farben oder Farbabstufungen oder Farbintensitäten vermittelt werden können.

Der Benutzer der Navigationsvorrichtung 1 gibt an der Eingabeeinheit 600 den Zielpunkt Z ein. Daraufhin übernimmt die Berechnungseinheit 400 wie beschrieben die Berechnung mehrerer Routen unter Berücksichtigung eines oder mehrerer Routenkriterien vom Ausgangspunkt S zum Zielpunkt Z.

Empfängt die Kommunikationseinheit 1000 während der Bewegung der Navigationsvorrichtung 1 bzw. des Fahrzeugs vom Ausgangspunkt S zum Zielpunkt Z Informationen über eine Verkehrsstörung auf der ausgewählten ersten Route 5, so wird diese in Form von Isolinien oder eines isografischen Diagramms wie beschrieben an der optischen Anzeigevorrichtung dargestellt und beispielsweise zusätzlich durch einen akustischen Signalton signalisiert, um die Aufmerksamkeit des Benutzers der Navigationsvorrichtung 1 auf die veränderte Situation auf der ausgewählten ersten Route 5 zu lenken. Der Benutzer betätigt eine Taste an der Eingabeeinheit 600 zur Bestätigung, dass er die Informationen registriert hat. Anschließend werden dann ausgehend von der aktuellen Position P die neuen alternativen Routen zur Umgehung der Verkehrsstörung V in der beschriebenen Weise berechnet und in die an der optischen Anzeigevorrichtung dargestellte Straßenkarte 80 eingeblendet, so dass die Verkehrsstörung und die Auswirkungen derselben auf die lokale Umgebung der Verkehrsstörung sowie die berechneten alternativen Routen gleichzeitig sichtbar sind.

Die Auswahl einer vorgeschlagenen berechneten Alternativroute durch den Benutzer der Navigationsvorrichtung 1 kann durch Eingabe an der Eingabeeinheit 600 erfolgen, indem in einem Abfragemenü an der optischen Anzeigevorrichtung eine der vorgeschlagenen alternativen Routen beispielsweise mittels Cursorsteuerung ausgewählt und die Auswahl beispielsweise durch Betätigung einer Bestätigungstaste bestätigt wird. Es kann jedoch auch vorgesehen sein, die Auswahl durch Spracheingabe, also akustisch, durchzuführen oder auf andere dem Fachmann bekannte Art und Weise.

## Patentansprüche

1. Navigationsvorrichtung (1) mit einer Berechnungseinheit (400) zur Berechnung einer ersten Route (5) von einem Ausgangspunkt (S) zu einem Zielpunkt (Z) und mit einer Wiedergabeeinheit (700) zur Wiedergabe der berechneten ersten Route (5), wobei die Berechnungseinheit (400) mindestens eine zweite Route (10) vom Ausgangspunkt (S) zum Zielpunkt (Z) berechnet, die von der ersten Route (5) verschieden ist, und wobei die Wiedergabeeinheit (700) zusätzlich zur ersten Route (5) die mindestens eine berechnete zweite Route (10) wiedergibt,
**dadurch gekennzeichnet,**
**dass** Eingabemittel (605) zur Manipulation oder Veränderung mindestens einer an der Wiedergabeeinheit (700) wiedergegebenen Routen (5, 10) vorgesehen sind und dass eine manipulierte oder veränderte Route zur Zielführung auswählbar ist.

2. Navigationsvorrichtung (1) nach Anspruch 1, **dadurch gekennzeichnet, dass** eine Auswahleinheit (900) zur Auswahl einer der wiedergegebenen Routen (5, 10) vorgesehen ist und dass eine Zielführungseinheit (800) vorgesehen ist, die Zielführungsinformationen für eine Position zwischen dem Ausgangspunkt (S) und dem Zielpunkt (Z) auf der ausgewählten Route (5) erzeugt und zur Wiedergabe an die Wiedergabeeinheit (700) abgibt.

3. Navigationsvorrichtung (1) nach Anspruch 1 oder 2, **dadurch gekennzeichnet, dass** die Wiedergabe der verschiedenen Routen (5, 10) an der Wiedergabeeinheit (700) in Abhängigkeit mindestens eines vorgegebenen Routenkriteriums erfolgt.

4. Navigationsvorrichtung (1) nach Anspruch 3, **dadurch gekennzeichnet, dass** als Routenkriterium das Staurisiko, die Fahrzeit, Geschwindigkeit, Länge der Fahrstrecke, Kraftstoffverbrauch, Meidegebiete, durch die die berechneten Routen nicht führen sollen, und/oder dergleichen an einer Eingabeeinheit (600) oder fest vorgebbar ist.

5. Navigationsvorrichtung (1) nach Anspruch 3 oder 4, **dadurch gekennzeichnet, dass** eine Gewichtung des mindestens einen Routenkriteriums an der Eingabeeinheit (600) oder fest vorgebbar ist.

6. Navigationsvorrichtung (1) nach einem der vorherigen Ansprüche, **dadurch gekennzeichnet, dass** eine Kommunikationseinheit (1000) vorgesehen ist, die Informationen über Verkehrsstörungen, insbesondere über den Verkehrsfluß, auf den berechneten Routen (5, 10) empfängt, und dass die Wiedergabeeinheit (700) diese Informationen wiedergibt.

7. Navigationsvorrichtung (1) nach Anspruch 6, **dadurch gekennzeichnet, dass** die Wiedergabeeinheit (700) die Informationen über die Verkehrsstörungen zusammen mit den berechneten Routen (5, 10) wiedergibt.

8. Navigationsvorrichtung (1) nach Anspruch 6, **dadurch gekennzeichnet, dass** die Wiedergabeeinheit (700) die Informationen über die Verkehrsstörungen getrennt von den berechneten Routen (5, 10) wiedergibt.

9. Navigationsvorrichtung (1) nach Anspruch 6, 7 oder 8, **dadurch gekennzeichnet, dass** die Wiedergabeeinheit (700) die Verkehrsstörungen in Form von Isolinien (25, 30, 35, 40, 45, 50) wiedergibt.

10. Navigationsvorrichtung (1) nach Anspruch 6, 7 oder 8, **dadurch gekennzeichnet, dass** die Wiedergabeeinheit (700) die Verkehrsstörungen in Form eines isographischen Diagramms (55) wiedergibt.

11. Navigationsvorrichtung (1) nach einem der Ansprüche 6 bis 10, **dadurch gekennzeichnet, dass** bei Empfang von Informationen über eine Verkehrsstörung auf der ausgewählten Route (5) die Berechnungseinheit (400) mindestens eine weitere von der ausgewählten Route (5) verschiedene Route (15, 20; 16, 17, 18) ausgehend von der aktuellen Position (P) als neuem Ausgangspunkt zum vorgegebenen Zielpunkt (Z) berechnet, und dass die Wiedergabeeinheit (700) zusätzlich zur ausgewählten Route (5) die mindestens eine berechnete weitere Route (15, 20; 16, 17, 18) zur Auswahl wiedergibt.

12. Navigationsvorrichtung (1) nach einem der Ansprüche 6 bis 11, **dadurch gekennzeichnet, dass** die empfangenen Informationen auch die Art der Verkehrsstörung umfassen und dass die Wiedergabeeinheit (700) die Art der Verkehrsstörung wiedergibt.

13. Navigationsvorrichtung (1) nach einem der vorherigen Ansprüche, **dadurch gekennzeichnet, dass** die Wiedergabe an der Wiedergabeeinheit (700) optisch und/oder akustisch erfolgt.

## Claims

1. Navigation device (1) having a calculation unit (400) for calculating a first route (5) from a starting point (S) to a destination (Z) and having a reproduction unit (700) for reproducing the calculated first route (5), the calculation unit (400) calculating at least one second route (10) from the starting point (S) to the destination (Z), which second route (10) is different from the first route (5), and the reproduction unit (700) reproducing the at least one calculated second route (10) in addition to the first route (5), **characterized in that** input means (605) for manipulating or changing at least one of the routes (5, 10) which is reproduced on the reproduction unit (700) are provided, and **in that** a manipulated or changed route can be selected for routing purposes.

2. Navigation device (1) according to Claim 1, **characterized in that** a selection unit (900) is provided for selecting one of the reproduced routes (5, 10), and **in that** a routing unit (800) is provided which generates routing information for a position between the starting point (S) and the destination (Z) on the selected route (5) and outputs it to the reproduction unit (700) to be reproduced.

3. Navigation device (1) according to Claim 1 or 2, **characterized in that** the reproduction of the different routes (5, 10) at the reproduction unit (700) takes place as a function of at least one predefined route criterion.

4. Navigation device (1) according to Claim 3, **characterized in that** the risk of a traffic jam, the driving time, the speed, the length of the part of a route, fuel consumption prohibited areas through which the calculated routes should not lead, and/or the like can be predefined as the route criterion at an input unit (600) or can be permanently predefined.

5. Navigation device (1) according to Claim 3 or 4, **characterized in that** a weighting of the at least one route criterion can be predefined at the input unit (600) or can be permanently predefined.

6. Navigation device (1) according to one of the preceding claims, **characterized in that** a communication unit (1000) is provided which receives information about traffic disruption, in particular about the traffic flow, on the calculated routes (5, 10), and **in that** the reproduction unit (700) reproduces this information.

7. Navigation device (1) according to Claim 6, **characterized in that** the reproduction unit (700) reproduces the information about the traffic disruption together with the calculated routes (5, 10).

8. Navigation device (1) according to Claim 6, **characterized in that** the reproduction unit (700) reproduces the information about the traffic disruption separately from the calculated routes (5, 10).

9. Navigation device (1) according to Claim 6, 7 or 8, **characterized in that** the reproduction unit (700) reproduces the traffic disruption in the form of isolines (25, 30, 35, 40, 45, 50).

10. Navigation device (1) according to Claim 6, 7 or 8, **characterized in that** the reproduction unit (700) reproduces the traffic disruption in the form of an isographic diagram (55).

11. Navigation device (1) according to one of Claims 6 to 10, **characterized in that** when information about traffic disruption on the selected route (5) is received, the calculation unit (400) calculates at least one further route (15, 20; 16, 17, 18) which is different from the selected route (5) on the basis of the current position (P) as a new starting point for the predefined destination (Z), and **in that** the reproduction unit (700) reproduces the at least one calculated further route (15, 20; 16, 17, 18) for selection, in addition to the selected route (5).

12. Navigation device (1) according to one of Claims 6 to 11, **characterized in that** the received information also comprises the type of traffic disruption, and **in that** the reproduction unit (700) reproduces the type of traffic disruption.

13. Navigation device (1) according to one of the preceding claims, **characterized in that** the reproduction is carried out visually and/or acoustically at the reproduction unit (700).

## Revendications

1. Dispositif de navigation (1) avec une unité de calcul (400) pour le calcul d'un premier itinéraire (5) depuis un point de départ (S) jusqu'à un point de destination (Z) et avec une unité de reproduction (700) pour la reproduction du premier itinéraire calculé (5), dans lequel l'unité de calcul (400) calcule au moins un deuxième itinéraire (10) depuis le point de départ (S) jusqu'au point de destination (Z), différent du premier itinéraire (5), et l'unité de reproduction (700) reproduit au moins le deuxième itinéraire calculé (10) en plus du premier itinéraire (5),
**caractérisé en ce que**
des moyens d'entrée (605) sont prévus pour la manipulation ou la modification d'au moins un des itinéraires (5, 10) reproduits sur le dispositif de reproduction (700), et un itinéraire manipulé ou modifié peut être sélectionné pour conduire à destination.

2. Dispositif de navigation (1) selon la revendication 1,
**caractérisé en ce qu'**
une unité de sélection (900) est prévue pour sélectionner un des itinéraires reproduits (5, 10) et une unité de conduite à destination (800), génère des informations de conduite à destination pour une position située entre le point de départ (S) et le point de destination (Z) sur l'itinéraire sélectionné (5), et les fournit pour être reproduites sur le dispositif de reproduction (700).

3. Dispositif de navigation (1) selon la revendication 1 ou 2,
**caractérisé en ce que**
la reproduction des différents itinéraires (5, 10) sur l'unité de reproduction (700) se fait en fonction d'au moins un critère d'itinéraire prédéterminé.

4. Dispositif de navigation (1) selon la revendication 3,
**caractérisé en ce que**
comme critère d'itinéraire on peut prédéterminer dans une unité d'entrée (600) ou fixement le risque de bouchon, le temps de trajet, la vitesse, la longueur du trajet, la consommation de carburant, des zones à éviter, par lesquelles les itinéraires calculés ne doivent pas passer, et/ou analogues.

5. Dispositif de navigation (1) selon la revendication 3 ou 4,
**caractérisé en ce qu'**
une pondération d'au moins un critère d'itinéraire peut être prédéterminée dans l'unité d'entrée (600) ou fixement.

6. Dispositif de navigation (1) selon l'une quelconque des revendications précédentes,
**caractérisé en ce qu'**
une unité de communication (1000) reçoit des informations sur des perturbations du trafic, notamment sur l'écoulement du trafic, sur les itinéraires calculés (5, 10), et l'unité de reproduction (700) reproduit ces informations.

7. Dispositif de navigation (1) selon la revendication 6,
**caractérisé en ce que**
l'unité de reproduction (700) reproduit les informations sur les perturbations du trafic en même temps que les itinéraires calculés (5, 10).

8. Dispositif de navigation (1) selon la revendication 6,
**caractérisé en ce que**
l'unité de reproduction (700) reproduit les perturbations du trafic séparément des itinéraires calculés (5, 10).

9. Dispositif de navigation (1) selon la revendication 6, 7 ou 8,
**caractérisé en ce que**
l'unité de reproduction (700) reproduit les perturbations du trafic sous la forme d'isolignes (25, 30, 35, 40, 45, 50).

10. Dispositif de navigation (1) selon la revendication 6, 7 ou 8,
**caractérisé en ce que**
l'unité de reproduction (700) reproduit les perturbations du trafic sous la forme d'un diagramme isographique (55).

11. Dispositif de navigation (1) selon l'une quelconque des revendications 6 à 10,
**caractérisé en ce qu'**
à la réception d'informations sur une perturbation du trafic sur l'itinéraire sélectionné (5), l'unité de calcul (400) calcule au moins un autre itinéraire (15, 20 ; 16, 17, 18) différent de l'itinéraire sélectionné (5), à partir de la position actuelle (P) comme nouveau point de départ jusqu'au point de destination prédéterminé (Z), et l'unité de reproduction (700) reproduit au moins un autre itinéraire calculé (15, 20 ; 16, 17, 18) en plus de l'itinéraire sélectionné (5) pour permettre le choix.

12. Dispositif de navigation (1) selon l'une quelconque des revendications 6 à 11,
**caractérisé en ce que**
les informations reçues contiennent aussi la nature de la perturbation du trafic et l'unité de reproduction (700) reproduit la nature de la perturbation du trafic.

13. Dispositif de navigation (1) selon l'une quelconque des revendications précédentes,
**caractérisé en ce que**
la reproduction sur l'unité de reproduction (700) est effectuée par voie optique et/ou acoustique.
